(19) Europäisches Patentamt
European Patent Office
Office européen des brevets

(11) **EP 3 394 110 B1**

(12) **EUROPEAN PATENT SPECIFICATION**

(45) Date of publication and mention
of the grant of the patent:
**07.10.2020 Bulletin 2020/41**

(51) Int Cl.:
**C08F 2/00** (2006.01)          **C08F 2/38** (2006.01)

(21) Application number: **16802037.8**

(22) Date of filing: **28.11.2016**

(86) International application number:
**PCT/EP2016/078940**

(87) International publication number:
**WO 2017/108337 (29.06.2017 Gazette 2017/26)**

(54) **OLEFIN POLYMERIZATION PROCESS IN THE PRESENCE OF ANTISTATIC COMPOSITION**

VERFAHREN ZUR OLEFINPOLYMERISIERUNG IN GEGENWART EINER ANTISTATISCHEN ZUSAMMENSETZUNG

PROCÉDÉ DE POLYMÉRISATION D'OLÉFINES EN PRÉSENCE DE COMPOSITION ANTISTATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.12.2015 EP 15201730**
**20.07.2016 EP 16180369**

(43) Date of publication of application:
**31.10.2018 Bulletin 2018/44**

(73) Proprietor: **Basell Poliolefine Italia S.r.l.**
**20121 Milano (IT)**

(72) Inventors:
• **MAZZUCCO, Antonio**
 **44122 Ferrara (IT)**
• **MEI, Gabriele**
 **44122 Ferrara (IT)**
• **CAPUTO, Tiziana**
 **44122 Ferrara (IT)**
• **PANTALEONI, Roberto**
 **44122 Ferrara (IT)**
• **BALESTRA, Enrico**
 **44122 Ferrara (IT)**
• **DI DIEGO, Maria**
 **44122 Ferrara (IT)**
• **DESTRO, Mara**
 **44122 Ferrara (IT)**
• **RINALDI, Riccardo**
 **44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**EP-A1- 0 107 127     EP-A1- 0 453 116**
**EP-A1- 1 308 464     EP-A1- 2 813 520**

• **Clariant Industrial and Consumer Specialities: "Product data sheet Polyglyko PE-K 270", Internet , 27 August 2015 (2015-08-27), XP002766120, Retrieved from the Internet: URL:https://www.clariant.com/en/Solutions/ Products/2015/08/27/15/27/Polyglykol-PEK27 0 [retrieved on 2017-01-19]**

**Description**

FIELD OF THE INVENTION

The present disclosure relates to a process for the preparation of polyolefins carried out in the presence of an antistatic composition. It also relates to an antistatic composition and to its use as antistatic agent in a process for the preparation of polyolefins.

BACKGROUND OF THE INVENTION

Antistatic agents are used in processes for the polymerization of olefins to avoid electrostatic charging in order to reduce wall sheeting and formation of polymer agglomerates in the polymerization reactor or in downstream equipment such as degassing and recovery vessels. In the context of olefin polymerization, antistatic agents are also called antifouling agents, polymerization process aids, activity inhibitors, productivity inhibitors or kinetic modifiers. The antistatic agents comprise antistatically-acting compounds which have polar functional groups such as acid or ester groups, amine or amide groups or hydroxyl or ether groups. Examples of antistatically-acting compounds are polysulfone copolymers, polymeric polyamines, polyalcohols, hydroxyesters of polyalcohols, salts of alkylarylsulfonic acids, polysiloxanes, alkoxyamines, polyglycol ethers, etc.

US 5,410,002, for example, discloses a polymerization process in which antistatic compounds are used to eliminate or reduce the build-up of polymer particles on the walls of a gas-phase polymerization reactor. Those antistatic compounds are capable of selectively inhibiting the polymerization on polymer particles smaller than 850 $\mu$m, the latter being responsible for fouling problems and polymer sheeting. A class of those antistatic/antifouling compounds are the N-alkyl diethanolamines, such as Atmer 163 commercialized by Croda.

A drawback of antistatic agents used in the polymerization of olefins is that they may negatively impact the activity of olefin polymerization catalysts. Also, their use is sometimes affected by constraints due to the need of obtaining polyolefins fit for application in food, beverage and medical packaging.

Lighter polar compounds, such as water, have also been proposed as antistatic agents in processes for olefin polymerization.

US 6,111,034, for example, describes a method of controlling static charges in a gas phase olefin polymerization reactor by addition of water in amounts greater than 3 ppmv. Sheeting is thus inhibited, and operation at higher recycle dew points is facilitated.

EP 1308464 A1, for example, describes a process for the gas-phase polymerization of olefins in a fluidized-bed reactor in which fouling is prevented and/or flowability of polymer is improved by using a process aid additive comprising at least one component selected from: (1) a glycerol ester of a fatty acid, (2) a sorbitan ester of a fatty acid, (3) an alkylamine carboxylate, (4) hydrogen peroxide and/or water, (5) a salt.

Water and other light polar compounds have however proven to be less efficient than other antistatic agents. It is believed that water acts indistinctly on growing polymer particles independently from their size, while other more efficient antistatic agents interact preferentially with the smaller particles that have higher capability to react with each other and generate melted agglomerates.

It is thus desirable to provide antistatic agents that are highly efficient in preventing reactor wall fouling and formation of polymer agglomerates in the polymerization reactor or in downstream equipment and, at the same time, pose no constraints for the use of the obtained polyolefins in food, beverage and medical applications.

SUMMARY OF THE INVENTION

The present disclosure provides a process for the preparation of polyolefins, said process comprising the step of polymerizing an olefin in the presence of a polymerization catalyst and of an antistatic composition comprising (with respect to the total weight of the antistatic composition):

(a) from 0.5 to 50 % by weight of a compound of formula R-OH wherein R represents hydrogen or a linear or branched, saturated alkyl group having from 1 to 15 carbon atoms; and

(b) from 50 to 99.5 % by weight of an oligomeric or polymeric organic compound having one or more terminal hydroxyl groups and a viscosity at 40°C of at least 20 mm$^2$/sec (DIN 51562).

The present disclosure also provides an antistatic composition comprising (with respect to the total weight of the antistatic composition):

(a) from 0.5 to 50 % by weight of a compound of formula R-OH wherein R represents hydrogen or a linear or branched, saturated alkyl group having from 1 to 15 carbon atoms; and
(b) from 50 to 99.5 % by weight of an oligomeric or polymeric organic compound having one or more terminal hydroxyl groups and a viscosity at 40°C of at least 20 mm$^2$/sec (DIN 51562).

The present disclosure further provides the use of an antistatic composition comprising (with respect to the total weight of the antistatic composition):

(a) from 0.5 to 50 % by weight of a compound of formula R-OH wherein R represents hydrogen or a linear or branched, saturated alkyl group having from 1 to 15 carbon atoms; and

(b) from 50 to 99.5 % by weight of an oligomeric or polymeric organic compound having one or more terminal hydroxyl groups and a viscosity at 40 °C of at least 20 mm$^2$/sec (DIN 51562);

as antistatic agent in a process for the preparation of polyolefins.

BRIEF DESCRIPTION OF THE DRAWINGS

Figure 1 depicts schematically a set-up of a fluidized bed gas phase reactor for carrying out the process for the preparation of polyolefins of the present disclosure, without however restricting the invention to the embodiments illustrated therein.

Figure 2 depicts schematically a set-up of a multizone circulating reactor for carrying out the process for the preparation of polyolefins of the present disclosure, without however restricting the invention to the embodiments illustrated therein.

Figure 3 shows the inner reactor surface after the polymerization run of Example 1.

Figure 4 shows the heat exchanger after the polymerization run of Example 1.

Figure 5 shows the inner reactor surface after the polymerization run of Example 2C.

Figure 6 shows the heat exchanger after the polymerization run of Example 2C.

Figure 7 shows the inner reactor surface after the polymerization run of Example 3C.

Figure 8 shows the heat exchanger after the polymerization run of Example 3C.

DETAILED DESCRIPTION OF THE INVENTION

In one embodiment, the compound (a) of formula R-OH is water. According to other embodiments, the compound (a) of formula R-OH is an alcohol selected from methanol, ethanol, 1-propanol, 1-butanol, 1-pentanol, 1-hexanol, 1-heptanol, 1-octanol, 1-nonanol, 1-decanol, undecan-1-ol, dodecan-1-ol, tridecan-1-ol, 1-tetradecanol, pentadecan-1-ol, isobutanol, isoamyl alcohol, 2-methyl-1-propanol, phenethyl alcohol, tryptophol, isopropanol, 2-butanol, 2-pentanol, 2-hexanol, 2-heptanol, cyclohexanol, tert-butyl alcohol, tert-amyl alcohol, 2-methyl-2-pentanol, 2-methylhexan-2-ol, 2-methylheptan-2-ol, 3-methyl-3-pentanol and 3-methyloctan-3-ol.
In some embodiments, the oligomeric or polymeric organic compound (b) has a viscosity at 40°C (DIN 51562) of 30-2000 mm$^2$/sec, or of 50-1500 mm$^2$/sec, or of 100-1000 mm$^2$/sec, or of 150-500 mm$^2$/sec, or of 200-400 mm$^2$/sec, or of 250-300 mm$^2$/sec, or of 260-285 mm$^2$/sec. The preferred viscosity at 40 °C (DIN 51562) of the oligomeric or polymeric organic compound (b) is in the range of 260 to 285 mm$^2$/sec.
In some embodiments, the oligomeric or polymeric organic compound (b) is selected from alcohols, polyethers, polyalcohols, hydroxyesters of polyalcohols, polyglycol ethers, polyglycol esters and derivatives thereof.
In some embodiments, the oligomeric or polymeric organic compound (b) is a polyether and, more specifically, an alkylene-oxide-derived polymer comprising on average from 10 to 200 repeating units --(CH$_2$-CHR-O)-, with R being hydrogen or an alkyl group having from 1 to 6 carbon atoms.
In some embodiments, all of terminal groups of the alkylene-oxide-derived polymer are -OH groups.

In some embodiments, the alkylene-oxide-derived polymer is a random copolymer of ethylene oxide and of other alkylene oxides, and the repeating units $--(CH_2-CH_2-O)_n-$ derived from ethylene oxide to repeating units $-(CH_2-CHR'-O)_m-$ derived from the other alkylene oxides, with R' being an alkyl group having from 1 to 6 carbon atoms, are present in a ratio n : m in the range of from 6 : 1 to 1 : 1, or in the range of from 5 : 1 to 1.5 : 1, or further in the range of from 4 : 1 to 2 : 1.

In some embodiments, the alkylene-oxide-derived polymer is a linear polymer of general formula (I)

$$HO-(CH_2-CH_2-O)_n-(CH_2-CHR'-O)_m-H \qquad (I)$$

wherein R' is an alkyl group having from 1 to 6 carbon atoms, or an alkyl group having from 1 to 3 carbon atoms, or a methyl group; n is in the range of from 10 to 180, or from 20 to 100, or from 30 to 50; m is in the range of from 2 to 120, or from 10 to 80, or from 10 to 40; n and m denoting the average number of repeating units.

In some embodiments, alkylene-oxide-derived polymer is a random copolymer of ethylene oxide and propylene oxide.

In some embodiments, the ethylene oxide/propylene oxide copolymer is a linear ethylene oxide/propylene oxide copolymer of general formula (II)

$$HO-(CH_2-CH_2-O)_n-(CH_2-CH(CH_3)-O)_m-H \qquad (II)$$

wherein n is in the range of from 10 to 180, or from 20 to 100, or from 30 to 50 and m is in the range of from 2 to 120, or from 10 to 80, or from 10 to 40.

Alkylene-oxide-derived polymers for use in the process of the present disclosure can be prepared by reacting ethylene oxide and the other alkylene oxides, such as propylene oxide, with polyhydric alcohols like diols, e.g. ethylene glycol, triols, e.g. glycerol, or polyols such as e.g. pentaerythritol. The reaction with diols results in linear polymers.

In some embodiments, the oligomeric or polymeric organic compound (b) is water-soluble. In the contest of the present description, "water-soluble" means soluble in water at room temperature, i.e. at about 23°C.

According to embodiments of the disclosure, the amount of antistatic composition introduced into the polymerization reactor is from 1 to 5000 ppm per weight, or from 10 to 3000 ppm per weight, or from 50 to 1000 ppm per weight referring to the weight of the prepared polyolefin.

According to embodiments of the disclosure, the amount of component (a) introduced into the polymerization reactor is from 1 to 70 ppm per weight, or from 1 to 50 ppm per weight, or from 2 to 40 ppm per weight, or from 2 to 30 ppm per weight, or from 3 to 30 ppm per weight, or from 3 to 20 ppm per weight referring to the weight of the prepared polyolefin.

According to embodiments of the disclosure, the amount of component (a) in the antistatic composition introduced into the polymerization reactor is from 0.5 to 50 % by weight, or from 3 to 30 % by weight, or from 5 to 15 % by weight with respect to the total weight of antistatic composition.

According to embodiments of the disclosure, the amount of component (b) in the antistatic composition introduced into the polymerization reactor is from 50 to 99.5 % by weight, or from 70 to 97 % by weight, or from 85 to 95 % by weight with respect to the total weight of antistatic composition.

According to a method of operation, the antistatic composition of the present disclosure can be provided to the polymerization process as a pre-prepared mixture. According to another method of operation, components (a) and (b) of the antistatic composition can be separately provided to the polymerization process.

In a method of operation, the antistatic composition or individual components thereof can be fed to the polymerization reactor in a flow of saturated or unsaturated hydrocarbon having from 2 to 6 carbon atoms that, according to an embodiment, can be a monomer, such as propylene, and, according to another embodiment, an alkane, such as propane. The monomer and the alkane can be either in liquid or gas form. According to an embodiment, the antistatic composition or components and the hydrocarbon are homogenized at short distance from the injection point by means of customary mixing/homogenizing/dispersing systems, such as static mixers so to create on emulsion of small droplets of the antistatic dispersed phase into the hydrocarbon continuous phase.

The antistatic composition of the present disclosure can be introduced into the reactor with the aid of any customary methods. The feeding can occur directly into the reactor and/or into a line leading to the reactor and/or into a line exiting the reactor. The components of the antistatic composition can also be fed separately. According to different embodiments, the antistatic composition can be fed:

- upstream or into a catalyst precontacting vessel, i.e. a vessel in which the catalyst components are brought into contact with each other;

- upstream or into a prepolymerization reactor;

- at any other point upstream a polymerization reactor;

- in case of a cascade process with one or more liquid or gas phase reactors, at any point in-between two reactors;

- suitably distributed into a reactor or in any recirculation flow thereof, for example into the bed of a fluidized bed gas phase reactor or into the bed of a fast fluidization bed or of a packed bed of -respectively - a riser or downer of a multizone circulating reactor;

- in the polymer discharge out of a polymerization reactor;

- in the unreacted monomer separation and finishing sections downstream the polymerization reactor(s).

The present disclosure provides a process for the polymerization of olefins, such as 1-olefins, i.e. hydrocarbons having terminal double bonds, without being restricted thereto. Typical 1-olefins are linear or branched 1-alkenes having from 2 to 12 carbon atoms, in particular linear 1-alkenes having from 2 to 10 carbon atoms such as ethylene, propylene, 1-butene, 1-pentene, 1-hexene, 1-heptene, 1-octene, 1-decene or branched 1-alkenes having from 2 to 10 carbon atoms such as 4-methyl-1-pentene, conjugated and non-conjugated dienes such as 1,3-butadiene, 1,4-hexadiene or 1,7-octadiene or vinyl-aromatic compounds such as styrene or substituted styrene. It is also possible to polymerize mixtures of various 1-olefins. Olefins that can be polymerized with the process of the present disclosure include those in which the double bond is part of a cyclic structure which can have one or more ring systems. Examples are cyclopentene, norbornene, tetracyclododecene or methylnorbornene or dienes such as 5-ethylidene-2-norbornene, norbornadiene or ethylnorbornadiene. It is also possible to polymerize mixtures of two or more olefins.

According to an embodiment, the process can be used for the homopolymerization or copolymerization of ethylene or for the homopolymerization or copolymerization of propylene. According to an embodiment, comonomers for use in ethylene polymerization are 1-alkenes having from 3 to 8 carbon atoms such as 1-butene, 1-pentene, 1-hexene and/or 1-octene in amount of up to 20 wt.% or from 0.01 wt.% to 15 wt.%, or from 0.05 wt.% to 12 wt.%. According to another embodiment, comonomers for use in propylene polymerization are ethylene and/or 1 butene and/or 1-hexene in amount of up to 40 wt.% or from 0.5 wt.% to 35 wt.%.

The process of the present disclosure allows the preparation of any types of common olefin polymers. According to an embodiment, the prepared olefin polymers can be broad molecular weight olefin polymers and, particularly, multimodal olefin polymers whereby the term multi-modal refers to the modality of the molecular weight distribution. As used in the art, and also used herein, multimodal shall include bimodal. Such polymers can be obtained from polymerizing olefins in a cascade of two or more polymerization reactors or in different zones of a multizone reactor under different reaction conditions. Thus, the "modality" indicates how many different polymerization conditions were utilized to prepare the polyolefin, independently whether this modality of the molecular weight distribution can be recognized as separated maxima in a gel permeation chromatography (GPC) curve or not. In addition to the molecular weight distribution, the olefin polymer can also have a comonomer distribution. In an embodiment the average comonomer content of polymer chains with a higher molecular weight is higher than the average comonomer content of polymer chains with a lower molecular weight. It is however also possible to employ identical or very similar reaction conditions in all polymerization reactors of the reaction cascade and so prepare narrow molecular weight or monomodal olefin polymers.

The polymerization of olefins can be carried out using customary olefin polymerization catalysts. That means the polymerization can be carried out using titanium-based Ziegler-Natta-catalysts, Phillips catalysts based on chromium oxide, or single-site catalysts. For the purposes of the present disclosure, single-site catalysts are catalysts based on chemically uniform transition metal coordination compounds. Furthermore, it is also possible to use mixtures of two or more of these catalysts for the polymerization of olefins. Such mixed catalysts may be designated as hybrid catalysts.

According to an embodiment, catalysts for the process of the present disclosure are Ziegler-Natta catalysts comprising:

(i) a solid catalyst component comprising Mg, Ti, an halogen and an electron donor compound (internal donor),

(ii) an alkylaluminum compound, and

(iii) optionally, an electron-donor compound (external donor).

Component (i) can be prepared by contacting a magnesium halide, a titanium compound having at least a Ti-halogen bond, and optionally an electron donor compound. The magnesium halide can be $MgCl_2$ in active form which is widely known from the patent literature as a support for Ziegler-Natta catalysts. The titanium compounds can be $TiCl_4$ or $TiCl_3$. Ti-haloalcoholates of formula $Ti(OR)_{n-y}X_y$, where n is the valence of titanium, y is a number between 1 and n-1 X is halogen and R is a hydrocarbon radical having from 1 to 10 carbon atoms, can also be used.

Electron donor compounds for preparing Ziegler type catalysts are for example alcohols, glycols, esters, ketones, amines, amides, nitriles, alkoxysilanes and aliphatic ethers. These electron donor compounds can be used alone or in mixtures with other electron donor compounds.

Other solid catalyst components which may be used are those based on a chromium oxide supported on a refractory oxide, such as silica, and activated by a heat treatment. Catalysts obtainable from those components consist of chromium (VI) trioxide chemically fixed on silica gel. These catalysts are produced under oxidizing conditions by heating the silica gels that have been doped with chromium(III)salts (precursor or precatalyst). During this heat treatment, the chromium(III) oxidizes to chromium(VI), the chromium(VI) is fixed and the silica gel hydroxyl group is eliminated as water.

Still other solid catalyst components which may be used are single-site catalysts supported on a carrier, such as metallocene catalysts comprising:

- at least a transition metal compound containing at least one n bond; and

- at least a cocatalyst selected from an alumoxane or a compound able to form an alkylmetallocene cation.

According to embodiments of the disclosure, when the catalyst includes an alkylaluminum compound, such as in Ziegler Natta catalysts, the molar ratio of component (a) to alkylaluminum compound introduced into the polymerization reactor is from 0.05 to 3, or from 0.1 to 2, or from 0.5 to 1.

The catalysts may be optionally subjected to prepolymerization before being fed to the polymerization reactor. In an embodiment the prepolymerization occurs in a loop reactor, The prepolymerization of the catalyst system may be carried out at a low temperature, in a range of from 0 °C to 60°C.

The process of the present disclosure can be carried out in any polymerization plant comprising one or more liquid-phase and/or gas-phase polymerization reactors. Examples of liquid-phase reactors are loop reactors and continuously stirred tank reactors (CSTR). Examples of gas-phase reactors include fluidized bed reactors, stirred bed reactors and reactors having two interconnected polymerization zones as described in EP 0782587 and EP 1012195. The process of the present disclosure can be carried in two or more cascade reactors, giving rise to a sequential multistage polymerization process. For instance, a fluidized bed reactor can be used to prepare a first polymer component, which is successively fed to a gas-phase reactor having two interconnected polymerization zones to prepare a second and a third polymer component. Or a first fluidized bed reactor can be used to prepare a first polymer component, which is successively fed to a second fluidized bed reactor to prepare a second polymer component and then to a third fluidized bed reactor to prepare a third polymer component. Accordingly, an olefin polymer endowed with a multi-modal molecular weight distribution can be obtained, as well as an olefin copolymer comprising two or more components having a different comonomer content.

In an embodiment of the present disclosure, the polymerization process is carried out as gas-phase polymerization, i.e. by a process in which the solid polymers are obtained from a gas-phase of the monomer or the monomers. Such gas-phase polymerizations may be carried out at pressures of from 0.1 to 20 MPa, or from 0.5 to 10 MPa, or from 1.0 to 5 MPa and polymerization temperatures from 40 to 150°C or from 65 to 125°C.

Gas-phase polymerization reactors can be, for example, horizontally or vertically stirred reactor, fluidized bed gas-phase reactors or multizone circulating reactors.

Fluidized-bed polymerization reactors are reactors in which the polymerization takes place in a bed of polymer particles which is maintained in a fluidized state by feeding in gas at the lower end of a reactor, for example below a gas distribution grid having the function of dispensing the gas flow, and taking off the gas again at its upper end. The reactor gas is then returned to the lower end to the reactor via a recycle line equipped with a compressor and a heat exchanger. The circulated reactor gas is, for example, a mixture of the olefins to be polymerized, inert gases such as nitrogen and/or lower alkanes such as ethane, propane, butane, pentane or hexane and optionally a molecular weight regulator such as hydrogen. According to an embodiment, nitrogen or propane can be used as inert gas, if appropriate in combination with further lower alkanes. The velocity of the reactor gas has to be sufficiently high firstly to fluidize the mixed bed of finely divided polymer present in the tube serving as polymerization zone and secondly to remove the heat of polymerization effectively. The polymerization can also be carried out in a condensed or super-condensed mode, in which part of the circulating reaction gas is cooled to below the dew point and returned to the reactor separately as a liquid and a gas-phase or together as a two-phase mixture in order to make additional use of the enthalpy of vaporization for cooling the reaction gas.

Multizone circulating reactors are gas-phase reactors in which two polymerization zones are linked to one another and the polymer is passed alternately a plurality of times through these two zones. Such reactors are, for example, described in WO 97/04015 A1 and WO 00/02929 A1 and have two interconnected polymerization zones, a riser, in which the growing polymer particles flow upward under fast fluidization or transport conditions and a downcomer, in which the growing polymer particles flow in a densified form under the action of gravity. The polymer particles leaving the riser enter the downcomer and the polymer particles leaving the downcomer are reintroduced into the riser, thus establishing a circulation of polymer between the two polymerization zones and the polymer is passed alternately a plurality of times through these two zones. It is further also possible to operate the two polymerization zones of one multizone circulating reactor with different polymerization conditions by establishing different polymerization conditions in its riser and its downcomer. For this purpose, the gas mixture leaving the riser and entraining the polymer particles can be partially or totally prevented from entering the downcomer. This can for example be achieved by feeding a barrier fluid in form of a gas and/or a liquid mixture into the downcomer, in the upper part thereof according to an embodiment. The barrier fluid should have an appropriate composition, different from that of the gas mixture present in the riser. The amount of added barrier fluid can be adjusted in a way that an upward flow of gas countercurrent to the flow of the polymer particles is generated, particularly at the top thereof, acting as a barrier to the gas mixture entrained among the particles coming from the riser. In this manner it is possible to obtain two different gas composition zones in one multizone circulating reactor. Furthermore it is also possible to introduce make-up monomers, comonomers, molecular weight regulator such as hydrogen and/or inert fluids at any point of the downcomer, below the barrier feeding point according to an embodiment. Thus, it is also easily possible to create varying monomer, comonomer and hydrogen concentrations along the downcomer resulting in a further differentiation of the polymerization conditions.

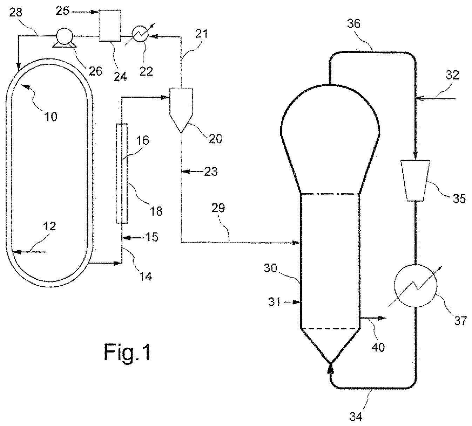

A cascade polymerization reactor, representing an embodiment, will now be described in detail with reference to the enclosed Figure 1, which is a diagrammatic representation and has to be considered illustrative and not limitative of the scope of the invention.

In such embodiment, the slurry polymerization of liquid propylene is carried out in a loop reactor 10. Schematically, catalyst components, co-catalyst, and propylene are introduced into the loop reactor, as shown by arrow 12. In the case of use of a Ziegler/Natta catalyst comprising a solid component supported on active MgCl2, the solid component can be fed as such or in a pre-polymerised form.

Loop reactor 10 may be the first polymerization reactor of the process, or there can be other reactor(s) upstream reactor 10. For the purposes of the present description, reactor 10 can receive from line 12 a polymer produced in other upstream reactor(s) or a prepolymer and/or a polymerization catalyst or catalyst component. In the simplified drawing of Figure 1 feed lines for catalyst, monomer, molecular weight regulator and other possible ingredients have been omitted for simplicity.

Most of the polymer slurry is continuously recirculated in the loop reactor 10, but a fraction of it is continuously discharged to a transfer line 14, connected to a flash chamber 20. The transfer line 14 comprises a pipe 16 equipped with heating means 18, for example a steam jacketed pipe. Upon discharge from reactor 10 the polymer slurry is depressurized, and during conveyance through pipe 16 of transfer line 14 the slurry is heated and brought to a temperature higher than the temperature within the loop reactor 10. Under these conditions liquid propylene is evaporated and a turbulent flow of a tri-phase stream comprising polymer, liquid monomers, and gaseous monomers is generated inside the pipe 16.

At the outlet of jacketed pipe 16 a two-phase stream containing evaporated monomers and polymer particles is conveyed to flash chamber 20, where the pressure is decreased: the particles of solid polymer fall by gravity towards the bottom of flash chamber 20, while the gaseous monomers flow upwards to the top of chamber 20, where are collected and sent via line 21 to a monomer recovery section comprising a cooler 22, a monomer make-up unit 24 and a compressor 26. Fresh propylene supplied as shown by arrow 25 and recycled propylene from flash chamber 20 are fed via 28 to loop reactor 10 for continued polymerization.

Propylene polymer discharged from flash tank 20 is transferred via line 29 to a fluidized-bed gas-phase reactor 30, where a propylene copolymer, for example an ethylene propylene elastomeric copolymer, is generated on the homo-PP particles coming from the loop reactor 10. Reactor 30 can be operated at a pressure comprised between 10 and 30 bar and at a temperature comprised between 50 and 110°C. Schematically, fresh monomers 32 are fed to reactor 30 through line 34, unreacted monomers are recycled through line 36 equipped with a compressor 35 and a heat exchanger 37 placed downstream the compressor 35, and the heterophasic copolymer or impact PP is discharged from line 40. Such product can be the end product of the polymerization process, thus it is transferred to the finishing section of the plant, or can be transferred to a second gas-phase reactor (not shown) for enrichment in the copolymer fraction.

According to an embodiment, the antistatic composition can be added to the polymer discharge downstream the discharge from the loop reactor 10 and upstream the inlet of jacketed pipe 16 (point 15). According to another embodiment, the antistatic composition can be added to the polymer discharged from flash tank 20 (point 23). According to a further embodiment, the antistatic composition can be added into the bed of the a fluidized-bed gas-phase reactor 30 (point 31).

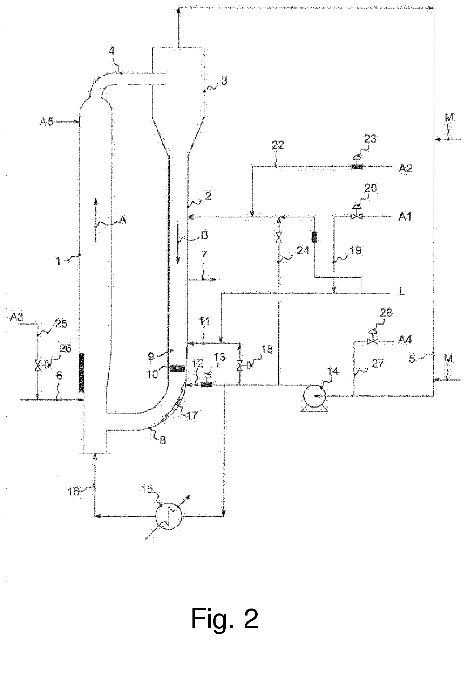

A gas phase polymerization reactor having two interconnected polymerization zones (riser and downcomer), representing an embodiment, will now be described in detail with reference to the enclosed Figure 2, which is a diagrammatic representation and has to be considered illustrative and not limitative of the scope of the invention.

The polymerization reactor shown in Figure 2 comprises a first polymerization zone 1 (riser), wherein the polymer particles flow upward under fast fluidization conditions along the direction of the arrow A and a second polymerization zone 2 (downcomer), wherein the polymer particles flow downward under the action of gravity along the direction of the arrow B.

The upper portion of the riser 1 is connected to a solid/gas separator 3 by the interconnection section 4. The separator 3 removes the major part of the unreacted monomers from the polymer particles and the polymer withdrawn from the bottom of separator 3 enters the top portion of the downcomer 2. The separated unreacted monomers, optionally together with polymerization diluents, such as propane, flow up to the top of separator 3 and are successively recycled to the bottom of the riser 1 via the recycle line 5.

A mixture comprising one or more olefin monomers, hydrogen as the molecular weight regulator, propane as the polymerization diluent, is fed to the polymerization reactor via one or more lines M, which are suitably placed along the gas recycle line 5, according to the knowledge of the person skilled in art.

The catalyst components, optionally after a prepolymerization step, are continuously introduced into the riser 1 via line 6. The produced polymer can be discharged from the reactor via a line 7, which can be placed on the lower portion of the downcomer 2 so that, due to the packed flow of densified polymer, the quantity of gas entrained with the discharged polymer is minimized. By inserting a control valve (not shown in Figure 2) on the polymer discharge line 7, it becomes possible to continuously control the flow rate of polymer produced by the polymerization reactor. Additional polymer discharge lines with respect to line 7 can be placed in the bottom part of the downcomer.

The polymerization reactor further comprises a transport section 8 connecting the bottom of downcomer 2 with the lower region of the riser 1. The bottom of the downcomer 2 converges into a slight restriction 9. A control valve 10 with an adjustable opening can be placed within the restriction 9. The flow rate Fp of polymer continuously circulated between the downcomer 2 and the riser 1 is adjusted by the level of opening of the control valve 10. The control valve 10 may be a mechanical valve, such as a butterfly valve, a ball valve, etc. A stream of dosing gas is fed into the lower part of the downcomer 2 by means of a line 11 placed at a short distance above the restriction 9. The dosing gas to be introduced through line 10 can be taken from the recycle line 5. In synthesis, the flow Fp of polymer particles circulated between downcomer 2 and riser 1 can be adjusted by varying the opening of the control valve 10 at the bottom of the downcomer and/or by varying the flow rate of the dosing gas entering the downcomer via line 11. The flow rate of dosing gas is adjusted by means of a control valve 18, which is suitably arranged on line 11.

The transport section 8 is designed as a bend descending from the bottom of downcomer 2 up to the lower region of the riser 1. Furthermore, a carrier gas is introduced via line 12 at the inlet of the transport section 8. The flow rate of carrier gas is adjusted by means of a control valve 13, which is suitably arranged on line 12.

Also the carrier gas is taken from the gas recycle line 5. Specifically, the gas recycle stream of line 5 is first subjected to compression by means of a compressor 14 and a minor percentage of the recycle stream passes through line 12, thus entering the transport section 8 and diluting the solid phase of polymer flowing through the transport section 8. The major part of the recycle stream, downstream the compressor 14, is subjected to cooling in a heat exchanger 15 and successively is introduced via line 16 at the bottom of the riser 1 at a high velocity, such to ensure fast fluidization conditions in the polymer bed flowing along the riser 1.

The carrier gas merges with the densified polymer coming from downcomer 2 at the inlet portion of transport section 8, after exiting the slits of the gas distribution grid 17. In the embodiment shown in Figure 2 the top end of the distribution grid 17 is coincident with the inlet of the transport section 8 and the distribution grid 17 extends along the bending of the transport section 8 for an angle $\alpha=60°$. The gas distribution grid 17 is formed by a plurality of trays fixed to the transport section 8 in a way to form slits in the overlapping area of adjacent trays.

According to an embodiment, a flow rate A1 of an antistatic composition A is metered via line 19 by valve 20 and then dispersed into a flow rate of liquid monomer L to obtain a more homogeneous distribution. Such dispersion is then pre-mixed with the dosing gas and thence fed into the downcomer.

As described in WO 2011/029735, the antistatic composition can alternatively or additionally be metered to one or more positions along the height of the downcomer via nozzles. In such a case, the antistatic composition flow rate A2 in line 22 is metered by one or more valves 23 and then pre-dispersed either in the liquid monomer L as described above, or alternatively in a fraction of recycle gas taken from recycle line 5 via line 24.

Furthermore, as also described in WO 2011/029735, flow rates of antistatic composition may also be fed into the reactor at the bottom of the riser (flow rate A3, line 25 metered by valve 26 into catalyst feed line 6) or into the main gas recycle line 5 (flow rate A4, line 27 metered by valve 28).

Still additionally and/or alternatively, flow rates of antistatic composition can be metered through lines 11 and 12, or at any point in the riser 1, particularly at the top of the riser (flow rate A5).

The carrier gas merges with the densified polymer coming from downcomer 2 at the inlet portion of transport section 8, after exiting the slits of a gas distribution grid 17. In the embodiment shown in Figure 2 the top end of the distribution grid 17 is coincident with the inlet of the transport section 8 and the distribution grid 17 extends along the bending of the transport section 8 for an angle of 60 °. The gas distribution grid 17 is formed by a plurality of trays fixed to the transport section 8 in a way to form slits in the overlapping area of adjacent trays. A detailed description of the gas distribution grid 17 can be found in WO 2012/031986.

Depending on the olefin (co)polymer to be produced, the polymerization reactor can be operated by properly adjusting the polymerization conditions and the monomers concentration in the riser and in the downcomer, so as to produce a wide variety of bimodal homopolymers and random copolymers. To this purpose, the gas mixture entraining the polymer particles and coming from the riser can be partially or totally prevented from entering the downcomer, so as to polymerize two different monomers compositions in the riser and the downcomer. This effect may be achieved by feeding a gaseous and/or a liquid barrier stream through a line placed in the upper portion of the downcomer. The barrier stream should have a composition different from the gas composition present inside the riser. The flow rate of the barrier stream can be adjusted, so that an upward flow of gas counter-current to the flow of the polymer particles is generated, particularly at the top of the downcomer, thus acting as a barrier to the gas mixture coming from the riser. For further details regarding this barrier effect at the top of the downcomer, reference is made to the disclosure of EP 1012195 A1.

The different or else identical polymerization processes can also, if desired, be connected in series and thus form a polymerization cascade. A parallel arrangement of reactors using two or more different or identical processes is also possible.

According to an embodiment, the gas-phase polymerization processes according to the present disclosure are carried out in the presence of an alkane having from 3 to 5 carbon atoms as polymerization diluent, e.g. in the presence of propane.

The process of the present disclosure provides a possibility for preparing an olefin polymer by gas-phase polymerization in a polymerization reactor in which the formation of polymer agglomerates in the polymerization reactors and fluctuations in the fluid-dynamics of the reactor are prevented or considerably reduced. Because of the reduced electrostatics, the tendency of the olefin polymer particles to stick to the reactor walls is reduced. This does not only reduce the risk of forming chunks or wall sheeting, which mostly leads to an unavoidable shut-down of the polymerization reactor because of plugging the discharge line, but also improves the fluid-dynamics of the reactor and avoids their fluctuations.

In case of a multizone circulating reactor if, for example, polymer particles have a tendency to adhere to the walls of the riser and coverage of the riser wall is continuously built-up, the polymer particle layer or a part of the layer can drop at a certain time. As a result, the amount of transportable polymer particles in the riser increases immediately, more polymer is transported to the downcomer and the polymer particle level within the downcomer rises very fast. By the increase of the number of polymer particles within the riser however not only the density of the reactor content in the riser changes temporarily but also the fluid-dynamics of the reaction mixture fluctuate. Moreover, the variation of the polymer particle level within the downcomer also influences the fluid-dynamics within the whole multizone circulating reactor.

The level of electrostatic charges observed in a multizone circulating reactor is sensitive to the molecular weight of the olefin polymer particles transferred into it. The lower their melt index is, the higher are the electrostatic charges in the second reactor. According to an embodiment, the process of the present disclosure is used in the case of polymer particles having a $MFR_{2.16}$ at a temperature of 190 °C under a load of 2.16 kg of less than 60 g/10 min being introduced into the multizone circulating reactor,

According to a further embodiment, in case of a cascade process comprising two or more fluidized-bed gas-phase reactors, the antistatic composition can be added into the bed of each reactor or to the polymer discharge downstream each reactor or else before the first reactor.

Using the antistatic composition of the present disclosure does not only result in a process for the polymerization of olefins in the presence of an antistatic composition which is simple to carry out, but the polymerization process has also a good operability. That means that the tendency for forming polymer deposits on the rector wall, i.e. reactor fouling, for forming lumps and for forming fines, i.e. for forming very small polyolefin particles, is reduced. Moreover, the activity of the catalyst is improved or at least not impaired and the product properties of the prepared polyolefins are not deteriorated.

EXAMPLES

The following examples are given to illustrate the present invention without any limiting purpose.

**Test Methods**

Melt flow rate (MFR "L")

Determined according to ISO 1133 (230 °C, 2.16 Kg)

Ethylene content in copolymers

The content of ethylene comonomer was determined by infrared spectroscopy by collecting the IR spectrum of the sample vs. an air background with a Fourier Transform Infrared spectrometer (FTIR). The instrument data acquisition parameters were:

- purge time: 30 seconds minimum

- collect time: 3 minutes minimum

- apodization: Happ-Genzel

- resolution: 2 cm-1.

Sample Preparation - Using a hydraulic press, a thick sheet was obtained by pressing about g 1 of sample between two aluminum foils. A small portion was cut from this sheet to mold a film. Recommended film thickness ranges between 0.02 and 0.05 cm (8 - 20 mils). Pressing temperature was $180\pm10°C$ (356 °F) and about 10 kg/cm2 (142.2 PSI) pressure for about one minute. The pressure was released, the sample removed from the press and cooled to room temperature.

The spectrum of pressed film sample was recorded in absorbance vs. wavenumbers (cm-1). The following measurements were used to calculate ethylene content:

- Area (At) of the combination absorption bands between 4482 and 3950 cm$^{-1}$, used for spectrometric normalization of film thickness;

- Area (AC2) of the absorption band between 750-700 cm$^{-1}$ after two proper consecutive spectroscopic subtractions of an isotactic non-additivated polypropylene spectrum and then of a reference spectrum of an ethylene-propylene random copolymer in the range 800-690 cm$^{-1}$;

- Height (DC4) of the absorption band at 769 cm$^{-1}$ (maximum value), after two proper consecutive spectroscopic subtractions of an isotactic non-additivated polypropylene spectrum and then of a reference spectrum of an ethylene-propylene random copolymer in the range 800-690 cm$^{-1}$.

In order to calculate the ethylene content, a calibration straight line for ethylene obtained by using samples of known amount of ethylene is needed and was obtained by plotting AC2/At versus ethylene molar percent (%C2m). The slope GC2 was calculated from a linear regression.

The spectra of the unknown samples were recorded and then (At), (AC2) and (DC4) of the unknown sample calculated. The ethylene content by weight was obtained from the ethylene content (% molar fraction C2m) of the sample calculated as follows:

$$\%C2m = \frac{1}{G_{C2}} \cdot \frac{A_{C2}}{A_t}$$

Xylene Solubles (XS)

Determined as follows: 2.5 g of polymer and 250 ml of xylene were introduced in a glass flask equipped with a refrigerator and a magnetical stirrer. The temperature was raised in 30 minutes up to the boiling point of the solvent. The clear solution so obtained was then kept under reflux and stirring for further 30 minutes. The closed flask was then kept in thermostatic water bath at 25°C for 30 minutes. The so formed solid was filtered on quick filtering paper. 100 ml of the filtered liquid was poured in a previously weighed aluminium container, which was heated on a heating plate under nitrogen flow, to remove the solvent by evaporation. The container was then kept in an oven at 80° C under vacuum until constant weight was obtained. The weight percentage of polymer soluble in xylene at room temperature was then calculated.

**Example 1**

Preparation of the Ziegler-Natta solid catalyst component

An initial amount of microspheroidal $MgCl_2 \cdot 2.8C_2H_5OH$ adduct was prepared according to the method described in Example 2 of WO98/44009, but operating on larger scale. The so-obtained adduct was then partially dealcoholated in a nitrogen flow until the alcohol content reached the value of 50%wt based on the total weight of the adduct.

300 ml of TiCl4 were introduced at room temperature under nitrogen atmosphere into a 500 ml round bottom flask, equipped with mechanical stirrer, cooler and thermometer. After cooling to 0°C, while stirring, diisobutylphthalate (internal donor) and 9.0 g of the adduct prepared as described above were sequentially added into the flask. The amount of internal donor added was such as to meet a Mg/donor molar ratio of 8. The temperature was raised to 100 °C and maintained for 2 hours. Thereafter, stirring was stopped, the solid product was allowed to settle and the supernatant liquid was siphoned off at 100 °C. After the supernatant was removed, additional fresh $TiCl_4$ was added to reach the initial liquid volume again. The mixture was then heated at 120°C and kept at this temperature for 1 hour. Stirring was stopped again, the solid was allowed to settle and the supernatant liquid was siphoned off. The solid was washed with anhydrous hexane six times in temperature gradient down to 60 °C and one time at room temperature. The obtained solid was then dried under vacuum and analyzed.

Catalyst Activation and Prepolymerization

Before introducing it into the polymerization reactors, the solid catalyst component prepared as described above was contacted with aluminum-triethyl (TEAL) and with dicyclopentyl-dimetoxysilane (donor D) under the conditions reported in Table 1.

The activated catalyst discharged from the activation vessel was continuously fed, together with liquid propylene, to a prepolymerization loop reactor operated at a temperature of 20 °C and a residence time of 7 minutes.

Polymerization

The polymerization run was conducted in continuous mode in a series of two reactors equipped with devices to transfer the product from the first to the second reactor. The first reactor was a liquid phase loop reactor and the second a fluidized bed gas-phase reactor, as illustrated in Figure 1 . The prepolymerized catalyst was discharged from the prepolymerization reactor and was continuously fed to a liquid phase loop reactor. A propylene homopolymer was prepared in the liquid loop reactor while an ethylene copolymer was prepared in the gas-phase reactor in the presence of the propylene homopolymer coming from the first stage. Liquid propylene was continuously fed to the loop reactor 10. Make-up propylene and hydrogen as molecular weight regulator were fed to the loop reactor 10 via line 25 and monomer make-up unit 24. A polypropylene slurry was discharged from the loop reactor 10, and allowed to continuously flow through transfer line 14 comprising a pipe 16 externally heated by a jacket in which hot steam is circulated.

An antistatic composition comprising 7 %w of water and 93 %w of Polyglykol PE-K 270 commercialized by Clariant was fed partly to the polymer discharged from the loop reactor via line 15 located upstream the inlet of the jacketed pipe 16, partly into the gas phase reactor at point 31. The flow rate of the antistatic composition feed was such as to obtain in the polymer the amounts of antistatic indicated in Table 1.

After the addition of the antistatic composition, the polymer slurry entered the steam jacketed pipe 16, wherein it was heated up to reach a temperature of 85°C with consequent evaporation of the liquid phase. Successively the stream of polypropylene and evaporated propylene obtained at the outlet of the pipe 16 was sent to a flash tank 20, where the evaporated monomer was separated from the polymer particles. The tangential entry of the above stream ensured a gas/solid separation by centrifugal effect. The flash tank 20 was operated at the pressure of 18 bar. The particles of solid polymer fall by gravity towards the bottom of the tank, while the gaseous phase exiting from the top was sent to the monomer recovery section. Polypropylene particles were discharged from the bottom of flash tank 20 and conveyed to the downstream gas phase reactor 30. The gas phase (propylene, ethylene and hydrogen) was continuously analyzed via gas-chromatography. At the end of the run the powder was discharged and dried under a nitrogen flow.

The main polymerization conditions and polymer features are reported in Table 1 together with the effect of the antistatic composition.

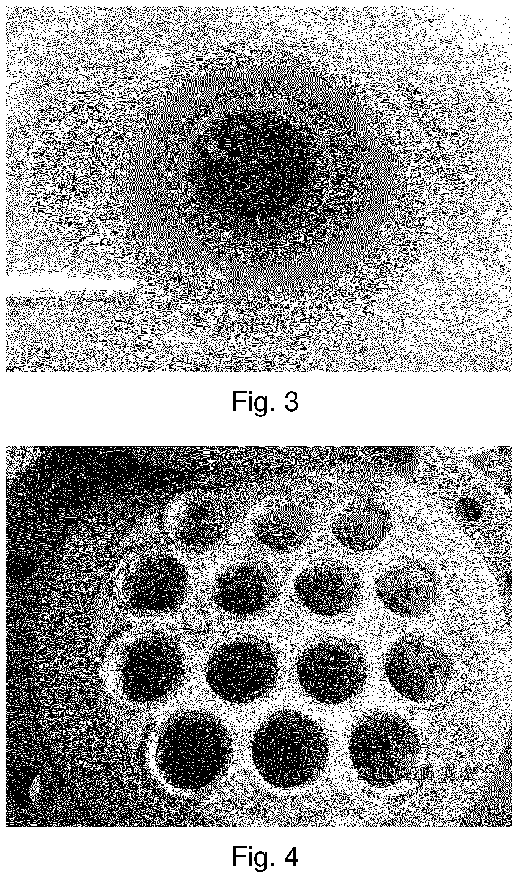

The antistatic composition proved to be effective. Also, visual inspection of the reactor surface (FIGURE 3) and heat exchanger (FIGURE 4) showed that both of them were clean, namely there was no formation of sheeting or adhesion of polymer particles. The addition of the antistatic composition ensured a very stable operation of the plant for the duration of the trial, as evidenced by the absence of problems at the reactor discharge. Also, the presence of the antistatic agent did not negatively affect the catalyst activity.

**Example 2C (comparative)**

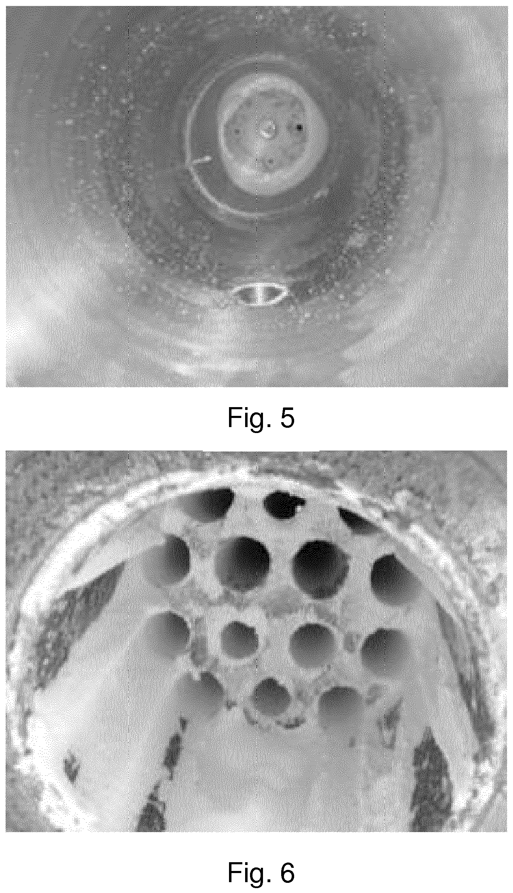

Example 1 was repeated with the difference that the antistatic agent used was water alone. In this case, the antistatic effect was lower, as reported in Table 1 below. Visual inspection of the reactor surface (FIGURE 5) and heat exchanger (FIGURE 6) showed that the former was clean while the latter was found severely fouled.

**Example 3C (comparative)**

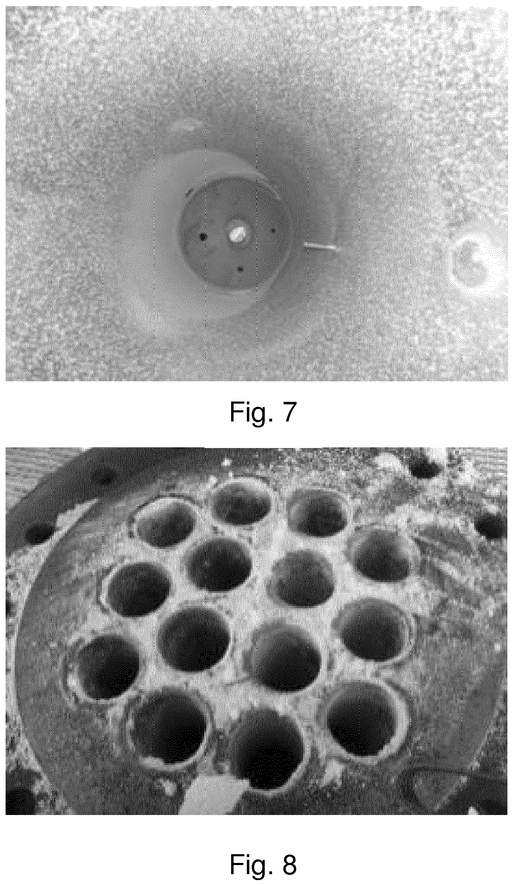

Example 1 was repeated with the difference that the antistatic agent used was PE-K 270 alone. Also in this case, the antistatic effect was lower, as reported in Table 1 below. Visual inspection of the reactor surface (FIGURE 7) and heat ex-changer (FIGURE 8) showed that the former was fouled while the latter was clean.

**Table 1**

| Example | | 1 | 2C | 3C |
|---|---|---|---|---|
| **Precontact** | | | | |
| Temperature (°C) | | 12 | 12 | 12 |
| Residence time (min) | | 31 | 32 | 32 |
| TEAL/catalyst (g/g) | | 8 | 8 | 8 |
| TEAL/donor ratio (g/g) | | 6 | 6 | 6 |
| **Prepolymerization** | | | | |
| Temperature (°C) | | 20 | 20 | 20 |
| Residence time (min) | | 7 | 7 | 7 |
| **Loop reactor in liquid phase** - propylene homopolymerization | | | | |
| Temperature (°C) | | 70 | 70 | 70 |
| Pressure (barg) | | 40 | 40 | 39 |
| Residence time (min) | | 56 | 65 | 54 |
| Split (%) | | 70 | 73 | 74 |
| **Gas-Phase reactor** - ethylene/propylene copolymerization | | | | |
| Temperature (°C) | | 80 | 80 | 80 |
| Pressure (barg) | | 17 | 17 | 17 |
| Residence time (min) | | 17 | 18 | 12 |
| $C_2^-/C_2^-+C_3^-$ (mol/mol) | | 0.49 | 0.50 | 0.45 |
| $H_2/C_2^-$ (mol/mol) | | 0.09 | 0.08 | 0.09 |
| Split (%) | | 30 | 27 | 26 |
| Mileage (kg/g) | | 44 | 38 | 48 |
| **Polymer analysis** | | | | |
| MFR "L" (dg/min) | | 13 | 14 | 14 |
| Ethylene content (wt%) | | 16.0 | 16.0 | 13.9 |
| Xylene solubles (wt%) | | 26.0 | 22.0 | 23.1 |
| **Effect of antistatic composition** | | | | |
| Antistatic composition | Type | $H_2O$+PE-K270 | $H_2O$ | PE-K270 |
| | Amount (ppm wt) | 260 | 30 | 310 |
| Water/TEAL (mol/mol) | | 0.63 | 0.90 | - |
| Reactor surface | | clean | clean | fouled |

(continued)

| Effect of antistatic composition | | | |
|---|---|---|---|
| Heat exchanger | clean | severely fouled | clean |
| Operability | very stable | unstable | stable |
| Notes: $C_2^-$ = ethylene; $C_3^-$ = propylene; $H_2$ = hydrogen; Split = amount of polymer prepared in the concerned reactor referred to the total weight; Mileage = amount of obtained polymer per amount of catalyst fed to the polymerization. | | | |

**Claims**

1.  A process for the preparation of polyolefins, said process comprising the step of polymerizing an olefin in the presence of an antistatic composition comprising:

    (a) from 0.5 to 50 % by weight of a compound of formula R-OH wherein R represents hydrogen or a linear or branched, saturated alkyl group having from 1 to 15 carbon atoms; and
    (b) from 50 to 99.5 % by weight of an oligomeric or polymeric organic compound having one or more terminal hydroxyl groups and a viscosity at 40 °C of at least 20 mm$^2$/sec (DIN 51562).

2.  The process according to claim 1, wherein the compound (a) of formula R-OH is water.

3.  The process according to claim 1, wherein the compound (a) of formula R-OH is an alcohol selected from methanol, ethanol, 1-propanol, 1-butanol, 1-pentanol, 1-hexanol, 1-heptanol, 1-octanol, 1-nonanol, 1-decanol, undecan-1-ol, dodecan-1-ol, tridecan-1-ol, 1-tetradecanol, pentadecan-1-ol, isobutanol, isoamyl alcohol, 2-methyl-1-propanol, phenethyl alcohol, tryptophol, isopropanol, 2-butanol, 2-pentanol, 2-hexanol, 2-heptanol, cyclohexanol, tert-butyl alcohol, tert-amyl alcohol, 2-methyl-2-pentanol, 2-methylhexan-2-ol, 2-methylheptan-2-ol, 3-methyl-3-pentanol or 3-methyloctan-3-ol.

4.  The process according to any of the preceding claims, wherein the oligomeric or polymeric organic compound (b) has a viscosity at 40°C in the range of 260 to 285 mm$^2$/sec (DIN 51562).

5.  The process according to any of the preceding claims, wherein the oligomeric or polymeric organic compound (b) is selected from alcohols, polyethers, polyalcohols, hydroxyesters of polyalcohols, polyglycol ethers, polyglycol esters and derivatives thereof.

6.  The process according to any of the preceding claims, wherein the oligomeric or polymeric organic compound (b) is an alkylene-oxide-derived polymer comprising on average from 10 to 200 repeating units --(CH2-CHR-O)-, with R being hydrogen or an alkyl group having from 1 to 6 carbon atoms.

7.  The process according to claim 5, wherein all of the terminal groups of the alkylene-oxide-derived polymer are -OH groups.

8.  The process according to claim 5 or 6, wherein the alkylene-oxide-derived polymer is a random copolymer of ethylene oxide and of other alkylene oxides, and the repeating units - -(CH2-CH2-O)n-derived from ethylene oxide to repeating units --(CH2-CHR'-O)m- derived from the other alkylene oxides, with R' being an alkyl group having from 1 to 6 carbon atoms, are present in a ratio n : m in the range of from 6 : 1 to 1 : 1.

9.  The process according to any of claims 5-7, wherein the alkylene-oxide-derived polymer is a linear polymer of general formula (I)

    HO-(CH2-CH2-O)n-(CH2-CHR'-O)m-H          (I)

    wherein R' is an alkyl group having from 1 to 6 carbon atoms; n is in the range of from 10 to 180; and m is in the range of from 2 to 120.

10. The process according to any of claims 5-8, wherein the alkylene-oxide-derived polymer is a random copolymer of ethylene oxide and propylene oxide.

11. The process according to claim 9, wherein the ethylene oxide/propylene oxide random copolymer is a linear ethylene oxide/propylene oxide copolymer of general formula (II)

$$HO-(CH_2-CH_2-O)_n-(CH_2-CH(CH_3)-O)_m-H \qquad (II)$$

wherein n is in the range of from 10 to 180 and m is in the range of from 2 to 120.

12. An antistatic composition comprising:

(a) from 0.5 to 50 % by weight of a compound of formula R-OH wherein R represents hydrogen or a linear or branched, saturated alkyl group having from 1 to 15 carbon atoms; and
(b) from 50 to 99.5 % by weight of an oligomeric or polymeric organic compound having one or more terminal hydroxyl groups and a viscosity at 40 °C of at least 20 $mm^2$/sec (DIN 51562).

13. The antistatic composition according to claim 12, wherein the compound (a) of formula R-OH is water.

14. The antistatic composition according to claim 12 or 13, wherein the oligomeric or polymeric organic compound (b) is a linear ethylene oxide/propylene oxide copolymer of general formula (II)

$$HO-(CH_2-CH_2-O)_n-(CH_2-CH(CH_3)-O)_m-H \qquad (II)$$

wherein n is in the range of from 10 to 180 and m is in the range of from 2 to 120.

15. Use of an antistatic composition comprising:

(a) from 0.5 to 50 % by weight of a compound of formula R-OH wherein R represents hydrogen or a linear or branched, saturated alkyl group having from 1 to 15 carbon atoms; and
(b) from 50 to 99.5 % by weight of an oligomeric or polymeric organic compound having one or more terminal hydroxyl groups and a viscosity at 40°C of at least 20 $mm^2$/sec (DIN 51562);

as antistatic agent in a process for the preparation of polyolefins.

**Patentansprüche**

1. Verfahren zur Herstellung von Polyolefinen, wobei das Verfahren den Schritt des Polymerisierens eines Olefins in Gegenwart einer antistatischen Zusammensetzung umfasst, welche umfasst:

(a) 0,5 bis 50 Gew.% einer Verbindung mit der Formel R-OH, wobei R für Wasserstoff oder eine lineare oder verzweigte gesättigte Alkylgruppe mit 1 bis 15 Kohlenstoffatomen steht; und
(b) 50 bis 99,5 Gew.% einer oligomeren oder polymeren organischen Verbindung mit einer oder mehreren endständigen Hydroxylgruppen und einer Viskosität bei 40 °C von mindestens 20 $mm^2$/s (DIN 51562).

2. Verbindung nach Anspruch 1, wobei die Verbindung (a) mit der Formel R-OH Wasser ist.

3. Verfahren nach Anspruch 1, wobei die Verbindung (a) mit der Formel R-OH ein Alkohol ausgewählt aus Methanol, Ethanol, 1-Propanol, 1-Butanol, 1-Pentanol, 1-Hexanol, 1-Heptanol, 1-Octanol, 1-Nonanol, 1-Decanol, Undecan-1-ol, Dodecan-1-ol, Tridecan-1-ol, 1-Tetradecanol, Pentadecan-1-ol, Isobutanol, Isoamylalkohol, 2-Methyl-1-propanol, Phenethylalkohol, Tryptophol, Isopropanol, 2-Butanol, 2-Pentanol, 2-Hexanol, 2-Heptanol, Cyclohexanol, tert-Butylalkohol, tert-Amylalkohol, 2-Methyl-2-pentanol, 2-Methylhexan-2-ol, 2-Methylheptan-2-ol, 3-Methyl-3-pentanol oder 3-Methyloctan-3-ol ist.

4. Verfahren nach einem der vorhergehenden Ansprüche, wobei die oligomere oder polymere organische Verbindung (b) eine Viskosität bei 40 °C im Bereich von 260 bis 285 $mm^2$/s (DIN 51562) aufweist.

5. Verfahren nach einem der vorhergehenden Ansprüche, wobei die oligomere oder polymere organische Verbindung (b) ausgewählt ist aus Alkoholen, Polyethern, Polyalkoholen, Hydroxyestern von Polyalkoholen, Polyglykolethern, Polyglykolestern und Derivaten davon.

6. Verfahren nach einem der vorhergehenden Ansprüche, wobei die oligomere oder polymere organische Verbindung (b) ein von Alkylenoxid abgeleitetes Polymer ist, das durchschnittlich 10 bis 200 sich wiederholende Einheiten $-(CH_2-CHR-O)-$ umfasst, wobei R Wasserstoff oder eine Alkylgruppe mit 1 bis 6 Kohlenstoffatomen ist.

7. Verfahren nach Anspruch 5, wobei alle der endständigen Gruppen des von Alkylenoxid abgeleiteten Polymers Gruppen -OH sind.

8. Verfahren nach Anspruch 5 oder 6, wobei das von Alkylenoxid abgeleitete Polymer ein statistisches Copolymer von Ethylenoxid und anderen Alkylenoxiden ist, und die sich wiederholenden Einheiten $-(CH_2-CH_2-O)_n-$, die von Ethylenoxid abgeleitet sind, zu den sich wiederholenden Einheiten $-(CH_2-CHR'-O)_m-$, die von den anderen Alkylenoxiden abgeleitet sind, wobei R' eine Alkylgruppe mit 1 bis 6 Kohlenstoffatomen ist, in einem Verhältnis von n:m im Bereich von 6:1 bis 1:1 vorhanden sind

9. Verfahren nach Anspruch 5 bis 7, wobei das von Alkylenoxid abgeleitete Polymer ein lineares Polymer mit der allgemeinen Formel (I) ist:

$$HO-(CH_2-CH_2-O)_n-(CH_2-CHR'-O)_m-H \qquad (I)$$

wobei R' eine Alkylgruppe mit 1 bis 6 Kohlenstoffatomen ist, n im Bereich von 10 bis 180 liegt, und m in einem Bereich von 2 bis 120 liegt.

10. Verfahren nach einem der Ansprüche 5 bis 8, wobei das von Alkylenoxid abgeleitete Polymer ein statistisches Polymer von Ethylenoxid und Propylenoxid ist.

11. Verfahren nach Anspruch 9, wobei das statistische Ethylenoxid/Propylenoxid-Polymer ein lineares Ethylenoxid/Propylenoxid-Copolymer mit der allgemeinen Formel (II) ist:

$$HO-(CH_2-CH_2-O)_n-(CH_2-CH(CH_3)-O)_m-H \qquad (II)$$

wobei n im Bereich von 10 bis 180 ist und m im Bereich von 2 bis 120 ist.

12. Antistatische Zusammensetzung, umfassend:

(a) 0,5 bis 50 Gew.% einer Verbindung mit der Formel R-OH, wobei R für Wasserstoff oder eine lineare oder verzweigte gesättigte Alkylgruppe mit 1 bis 15 Kohlenstoffatomen steht; und
(b) 50 bis 99,5 Gew.% einer oligomeren oder polymeren organischen Verbindung mit einer oder mehreren endständigen Hydroxylgruppen und einer Viskosität bei 40 °C von mindestens 20 mm$^2$/s (DIN 51562).

13. Antistatische Zusammensetzung nach Anspruch 12, wobei die Verbindung (a) mit der Formel R-OH Wasser ist.

14. Antistatische Zusammensetzung nach Anspruch 12 oder 13, wobei die oligomere oder polymere organische Verbindung (b) ein lineares Ethylenoxid/Propylenoxid-Polymer mit der allgemeinen Formel (II) ist:

$$HO-(CH_2-CH_2-O)_n-(CH_2-CH(CH_3)-O)_m-H \qquad (II)$$

wobei n im Bereich von 10 bis 180 liegt und m im Bereich von 2 bis 120 liegt.

15. Verwendung einer antistatischen Zusammensetzung, umfassend:

(a) 0,5 bis 50 Gew.% einer Verbindung mit der Formel R-OH, wobei R für Wasserstoff oder eine lineare oder verzweigte gesättigte Alkylgruppe mit 1 bis 15 Kohlenstoffatomen steht; und
(b) 50 bis 99,5 Gew.% einer oligomeren oder polymeren organischen Verbindung mit einer oder mehreren endständigen Hydroxylgruppen und einer Viskosität bei 40 °C von mindestens 20 mm$^2$/s (DIN 51562)

als Antistatikmittel in einem Verfahren zur Herstellung von Polyolefinen.

**EP 3 394 110 B1**

**Revendications**

1. Procédé de préparation de polyoléfines, ledit procédé comprenant l'étape de polymérisation d'une oléfine en présence d'une composition antistatique comprenant :

   (a) 0,5 à 50% en poids d'un composé de formule R-OH R représentant hydrogène ou un groupe alkyle saturé linéaire ou ramifié comprenant 1 à 15 atomes de carbone ; et
   (b) 50 à 99,5% en poids d'un composé organique oligomère ou polymère présentant un ou plusieurs groupes hydroxyle terminaux et une viscosité à 40°C d'au moins 20 mm$^2$/sec (DIN 51562).

2. Procédé selon la revendication 1, le composé (a) de formule R-OH étant l'eau.

3. Procédé selon la revendication 1, le composé (a) de formule R-OH étant un alcool choisi parmi le méthanol, l'éthanol, le 1-propanol, le 1-butanol, le 1-pentanol, le 1-hexanol, le 1-heptanol, le 1-octanol, le 1-nonanol, le 1-décanol, l'undécan-1-ol, le dodécan-1-ol, le tridécan-1-ol, le 1-tétradécanol, le pentadécan-1-ol, l'isobutanol, l'alcool isoamylique, le 2-méthyl-1-propanol, l'alcool phénéthylique, le tryptophol, l'isopropanol, le 2-butanol, le 2-pentanol, le 2-hexanol, le 2-heptanol, le cyclohexanol, l'alcool tert-butylique, l'alcool tert-amylique, le 2-méthyl-2-pentanol, le 2-méthylhexan-2-ol, le 2-méthylheptan-2-ol, le 3-méthyl-3-pentanol ou le 3-méthyloctan-3-ol.

4. Procédé selon l'une quelconque des revendications précédentes, le composé organique oligomère ou polymère (b) présentant une viscosité à 40°C située dans la plage de 260 à 285 mm$^2$/sec (DIN 51562).

5. Procédé selon l'une quelconque des revendications précédentes, le composé organique oligomère ou polymère (b) étant choisi parmi les alcools, les polyéthers, les polyalcools, les hydroxyesters de polyalcools, les polyglycoléthers, les esters de polyglycol et leurs dérivés.

6. Procédé selon l'une quelconque des revendications précédentes, le composé organique oligomère ou polymère (b) étant un polymère dérivé d'oxyde d'alkylène comprenant en moyenne 10 à 200 motifs récurrents -(CH$_2$-CHR-O)-, R représentant hydrogène ou un groupe alkyle comprenant 1 à 6 atomes de carbone.

7. Procédé selon la revendication 5, tous les groupes terminaux du polymère dérivé d'oxyde d'alkylène étant des groupes-OH.

8. Procédé selon la revendication 5 ou 6, le polymère dérivé d'oxyde d'alkylène étant un copolymère statistique d'oxyde d'éthylène et d'autres oxydes d'alkylène et les motifs récurrents -(CH$_2$-CH$_2$-O)$_n$ dérivés de l'oxyde d'éthylène aux motifs récurrents -(CH$_2$-CHR'-O)$_m$ dérivés des autres oxydes d'alkylène, R' représentant un groupe alkyle comprenant 1 à 6 atomes de carbone, étant présents dans un rapport n:m dans la plage de 6:1 à 1:1.

9. Procédé selon l'une quelconque des revendications 5 à 7, le polymère dérivé d'oxyde d'alkylène étant un polymère linéaire de formule générale (I)

$$HO-(CH_2-CH_2-O)_n-(CH_2-CHR'-O)_m-H \qquad (I)$$

   R' représentant un groupe alkyle comprenant 1 à 6 atomes de carbone ; n étant situé dans la plage de 10 à 180 ; et m étant situé dans la plage de 2 à 120.

10. Procédé selon l'une quelconque des revendications 5 à 8, le polymère dérivé d'oxyde d'alkylène étant un copolymère statistique d'oxyde d'éthylène et d'oxyde de propylène.

11. Procédé selon la revendication 9, le copolymère statistique oxyde d'éthylène/oxyde de propylène étant un copolymère linéaire d'oxyde d'éthylène/oxyde de propylène de formule générale (II)

$$HO-(CH_2-CH_2-O)_n-(CH_2-CH(CH_3)-O)_m-H \qquad (II)$$

   n étant situé dans la plage de 10 à 180 et m étant situé dans la plage de 2 à 120.

12. Composition antistatique comprenant :

(a) 0,5 à 50% en poids d'un composé de formule R-OH, R représentant hydrogène ou un groupe alkyle saturé linéaire ou ramifié comprenant 1 à 15 atomes de carbone ; et

(b) 50 à 99,5% en poids d'un composé organique oligomère ou polymère présentant un ou plusieurs groupes hydroxyle terminaux et une viscosité à 40°C d'au moins 20 mm$^2$/sec (DIN 51562).

13. Composition antistatique selon la revendication 12, le composé (a) de formule R-OH étant l'eau.

14. Composition antistatique selon la revendication 12 ou 13, le composé organique oligomère ou polymère (b) étant un copolymère linéaire d'oxyde d'éthylène/oxyde de propylène de formule générale (II)

$$HO\text{-}(CH_2\text{-}CH_2\text{-}O)_n\text{-}(CH_2\text{-}CH(CH_3)\text{-}O)_m\text{-}H \qquad (II)$$

n étant situé dans la plage de 10 à 180 et m étant situé dans la plage de 2 à 120.

15. Utilisation d'une composition antistatique comprenant :

(a) 0,5 à 50% en poids d'un composé de formule R-OH, R représentant hydrogène ou un groupe alkyle saturé linéaire ou ramifié comprenant 1 à 15 atomes de carbone ; et

(b) 50 à 99,5% en poids d'un composé organique oligomère ou polymère présentant un ou plusieurs groupes hydroxyle terminaux et une viscosité à 40°C d'au moins 20 mm$^2$/sec (DIN 51562) ;

en tant qu'agent antistatique dans un procédé de préparation de polyoléfines.

Fig.1

Fig. 2

Fig. 3

Fig. 4

Fig. 5

Fig. 6

Fig. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5410002 A
- US 6111034 A
- EP 1308464 A1
- EP 0782587 A
- EP 1012195 A
- WO 9704015 A1
- WO 0002929 A1
- WO 2011029735 A
- WO 2012031986 A
- EP 1012195 A1
- WO 9844009 A